# EUROPEAN PATENT APPLICATION

(11) **EP 4 692 984 A1**
(43) Date of publication of application: **11.02.2026**
(21) Application number: 23935513.4
(22) Date of filing: 06.10.2023
(51) Int. Cl.: G06F 1/16, H01Q 1/24, G06F 3/0487

(54) **ELECTRONIC DEVICE FOR DETECTING GRIP AND CONTROL METHOD THEREFOR**

(30) Priority: 25.04.2023 KR 20230053745; 22.05.2023 KR 20230065434
(71) Applicant: Samsung Electronics Co., Ltd., Suwon-si, Gyeonggi-do 16677 (KR)
(72) Inventor: CHU, Duho, Suwon-si, Gyeonggi-do 16677 (KR); KIM, Sangkyu, Suwon-si, Gyeonggi-do 16677 (KR); KIM, Yongyoun, Suwon-si, Gyeonggi-do 16677 (KR); KIM, Changmin, Suwon-si, Gyeonggi-do 16677 (KR); OH, Myeongsu, Suwon-si, Gyeonggi-do 16677 (KR); RYOO, Kanghyun, Suwon-si, Gyeonggi-do 16677 (KR)
(74) Representative: Gulde & Partner
(86) International application number: PCT/KR2023/015436
(87) International publication number: WO 2024/225540

(57) **Abstract**

An electronic device for detecting a grip and a control method therefor are provided. A foldable electronic device including a first housing and a second housing that include metal members comprises: an antenna; a first sensor for detecting a folding state of the foldable electronic device; a second sensor for detecting a grip state of the foldable electronic device; and at least one processor. The at least one processor resets the second sensor when a change in the folding state is detected through the first sensor to remove an influence caused by the metal members. The at least one processor identifies an IQ value of the antenna to determine a grip state changed to an unknown state according to the resetting of the second sensor. The at least one processor identifies the grip state on the basis of the identified IQ value and a preset threshold range.

## Description

### [Technical Field]

Various embodiments of the disclosure relate to an electronic device for detecting grip and a control method therefor.

### [Background Art]

With the advance of sensor technology, various sensors may be included in an electronic device. The various sensors included in an electronic device may detect the surrounding environment and/or the state of the electronic device. Electronic devices may perform various functions and operate efficiently, based on information detected using the sensors.

For example, an electronic device may use a grip sensor to detect whether a user is gripping the electronic device. When the electronic device determines that the user is gripping the electronic device, the electronic device may perform power back-off on the output of an antenna to minimize the effects of electromagnetic waves. Alternatively, when the electronic device determines that the user is not gripping the electronic device, the electronic device may increase the output of the antenna to improve the performance of the antenna.

The above information is provided as related art to aid in understanding the disclosure. No claim or determination is made as to whether any of the above content may be applied as prior art related to the disclosure.

### [Disclosure of Invention]

### [Solution to Problem]

An electronic device according to various embodiments of the disclosure may be a foldable electronic device including a first housing and a second housing, which include metal members. The electronic device may include an antenna, a first sensor configured to detect a folding state of the foldable electronic device, a second sensor configured to detect a grip state of the foldable electronic device, and at least one processor. The at least one processor may, in case that a change in the folding state is detected by the first sensor, reset the second sensor to eliminate an effect caused by the metal members. The at least one processor may identify an IQ value of the antenna to determine a grip state that has been changed to an unknown state in response to the reset of the second sensor. The at least one processor may identify the grip state, based on the identified IQ value and a preset threshold range.

According to various embodiments of the disclosure, a method for controlling a foldable electronic device including a first housing and a second housing that include metal members may, in case that a folding state of the foldable electronic device changes, reset a sensor, which is configured to detect a grip state, to eliminate an effect caused by the metal members. The control method may identify an IQ value of an antenna to determine the grip state that has been changed to an unknown state in response to the reset of the sensor. The control method may identify the grip state, based on the identified IQ value and a preset threshold range

According to various embodiments of the disclosure, a non-transitory computer-readable storage medium recording a program for performing a control method for a foldable electronic device including a first housing and a second housing that include metal members may, in case that a folding state of the foldable electronic device changes, reset a sensor configured to detect a grip state to eliminate an effect caused by the metal members. The non-transitory computer-readable storage medium may identify an IQ value of an antenna to determine a grip state that has been changed to an unknown state in response to the reset of the sensor. The non-transitory computer-readable storage medium may identify the grip state, based on the identified IQ value and a preset threshold range.

### [Brief Description of Drawings]

FIG. 1 is a block diagram of an electronic device in a network environment according to various embodiments.
FIG. 2 is a block diagram illustrating the configuration of an electronic device according to various embodiments.
FIGS. 3A, 3B, and 3C illustrate an incoming call process according to various embodiments.
FIG. 4 illustrates an IQ graph according to various embodiments.
FIG. 5 is a flowchart illustrating a control method for an electronic device according to various embodiments.
FIG. 6 is a flowchart illustrating a process for identifying an unknown grip state by using an IQ value according to various embodiments.

### [Mode for the Invention]

Hereinafter, various embodiments of the disclosure may be described with reference to the accompanying drawings.

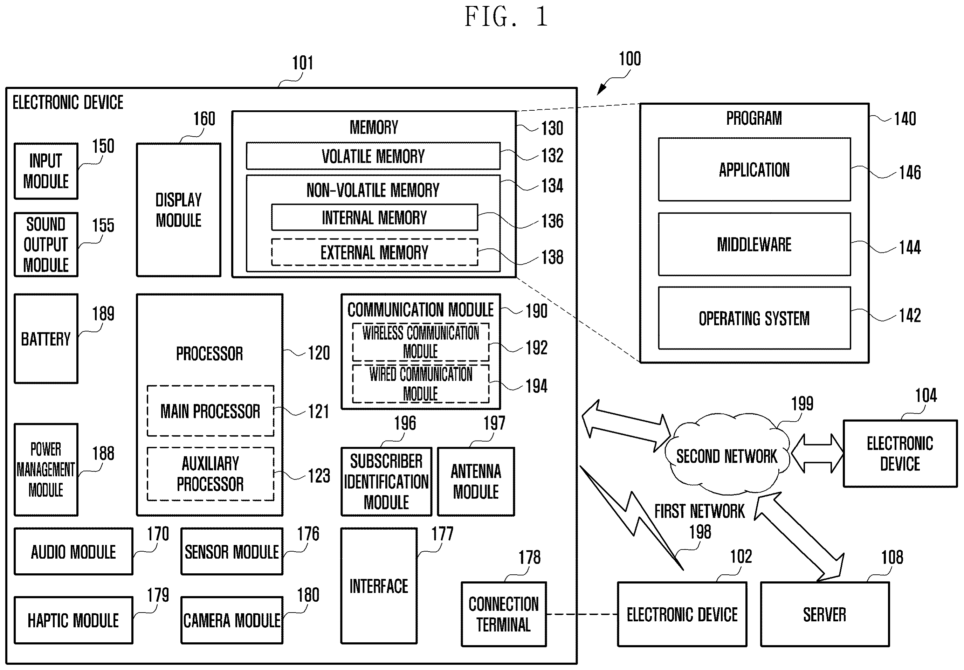

FIG. 1 is a block diagram illustrating an electronic device 101 in a network environment 100 according to various examples. Referring to FIG. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an example, the electronic device 101 may communicate with the electronic device 104 via the server 108. According to an example, the electronic device 101 may include a processor 120, memory 130, an input module 150, a sound output module 155, a display module 160, an audio module 170, a sensor module 176, an interface 177, a connection terminal 178, a haptic module 179, a camera module 180, a power management module 188, a battery 189, a communication module 190, a subscriber identification module (SIM) 196, or an antenna module 197. In some examples, at least one of the components (e.g., the connection terminal 178) may be omitted from the electronic device 101, or one or more other components may be added in the electronic device 101. In some examples, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to one example, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an example, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an example, the auxiliary processor 123 (e.g., an image signal processor or a communication processor) may be implemented as part of another component (e.g., the camera module 180 or the communication module 190) functionally related to the auxiliary processor 123. According to an example, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134. The non-volatile memory may include at least one of an internal memory 136 and an external memory 138.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an example, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an example, the display module 160 may include a touch sensor adapted to detect a touch, or a pressure sensor adapted to measure the intensity of force incurred by the touch.

The audio module 170 may convert a sound into an electrical signal and vice versa. According to an example, the audio module 170 may obtain the sound via the input module 150, or output the sound via the sound output module 155 or a headphone of an external electronic device (e.g., the electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an example, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an example, the interface 177 may include, for example, a high definition multimedia interface (HDMI), a universal serial bus (USB) interface, a secure digital (SD) card interface, or an audio interface.

The connection terminal 178 may include a connector via which the electronic device 101 may be physically connected with the external electronic device (e.g., the electronic device 102). According to an example, the connection terminal 178 may include, for example, an HDMI connector, a USB connector, an SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an example, the haptic module 179 may include, for example, a motor, a piezoelectric element, or an electric stimulator.

The camera module 180 may capture a still image or moving images. According to an example, the camera module 180 may include one or more lenses, image sensors, image signal processors, or flashes.

The power management module 188 may manage power supplied to the electronic device 101. According to one example, the power management module 188 may be implemented as at least part of, for example, a power management integrated circuit (PMIC).

The battery 189 may supply power to at least one component of the electronic device 101. According to an example, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an example, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth^{™}, wireless-fidelity (Wi-Fi) direct, or infrared data association (IrDA)) or the second network 199 (e.g., a long-range communication network, such as a legacy cellular network, a fifth generation (5G) network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a fourth generation (4G) network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the millimeter wave (mmWave) band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an example, the wireless communication module 192 may support a peak data rate (e.g., 20 gigabits per second (Gbps) or more) for implementing eMBB, loss coverage (e.g., 164 decibels (dB) or less) for implementing mMTC, or U-plane latency (e.g., 0.5 milliseconds (ms) or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an example, the antenna module 197 may include an antenna including a radiating element composed of a conductive material or a conductive pattern formed in or on a substrate (e.g., a printed circuit board (PCB)). According to an example, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an example, another component (e.g., a radio frequency integrated circuit (RFIC)) other than the radiating element may be additionally formed as part of the antenna module 197.

According to various examples, the antenna module 197 may form an mmWave antenna module. According to an example, the mmWave antenna module may include a printed circuit board, an RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an example, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an example, all or some of operations to be executed at the electronic device 101 may be executed at one or more of the external electronic devices (e.g. electronic devices 102 and 104 or the server 108). For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In an example, the external electronic device 104 may include an internet-of-things (IoT) device. The server 108 may be an intelligent server using machine learning and/or a neural network. According to an example, the external electronic device 104 or the server 108 may be included in the second network 199. The electronic device 101 may be applied to intelligent services (e.g., smart home, smart city, smart car, or healthcare) based on 5G communication technology or IoT-related technology.

The electronic device according to various examples may be one of various types of electronic devices. The electronic devices may include, for example, a portable communication device (e.g., a smartphone), a computer device, a portable multimedia device, a portable medical device, a camera, a wearable device, or a home appliance. According to an example of the disclosure, the electronic devices are not limited to those described above.

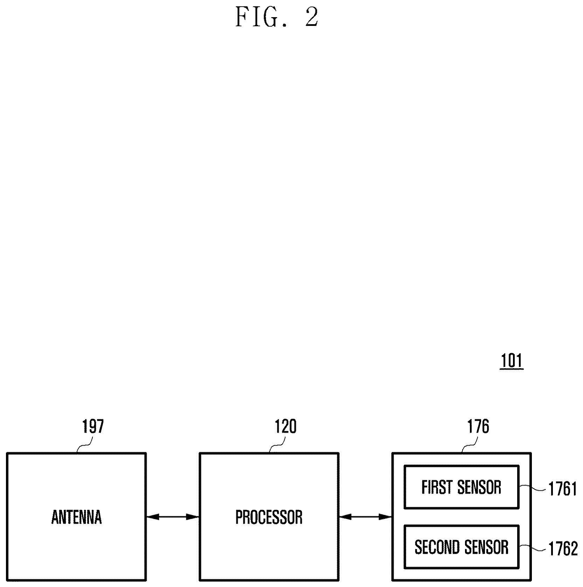

FIG. 2 is a block diagram illustrating the configuration of an electronic device according to various embodiments.

Referring to FIG. 2, the electronic device 101 may include an antenna 197, a sensor 176, and a processor 120. For example, the electronic device 101 may be of a foldable type including a first housing and a second housing, and the first housing and the second housing may include metal members. The first housing and the second housing may be connected by a hinge. The first housing and/or the second housing may rotate within a range of 0 to 360 degrees around the hinge. A first display may be included on one surface of the first housing, and a second display may be included on one surface of the second housing. The first display and the second display may be separate displays. Alternatively, the displays may include a flexible display. In this case, the first display and the second display may be partial displays of the flexible display.

As an embodiment, when the display of the electronic device 101 is a flexible display, one surface of the first housing may include a first area (first display) of the flexible display, and one surface of the second housing may include a second area (second display) of the flexible display. When the angle between the first housing and the second housing is 180 degrees (e.g., open or unfolded), the first area and the second area of the flexible display may be viewed as a single display as a whole. When the angle between the first housing and the second housing is 0 degrees (e.g., closed or folded), the first area and the second area of the flexible display may be close to each other and not exposed to the outside.

The antenna 197 may transmit data to an external device (or an external network) at an intensity, phase, and/or frequency preset by the processor 120, and receive data from the external device (or the external network).

The sensor 176 may detect the state of the electronic device 101. The electronic device 101 may include multiple sensors. For example, the sensor 176 may include a first sensor 1761 and a second sensor 1762. The first sensor 1761 may detect the folding state of the electronic device 101. For example, the first sensor 1761 may detect the open (or unfolded) state or the closed (or folded) state of the electronic device 101. In an embodiment, the first sensor 1761 may be a magnetic sensor, and the magnetic sensor may include a Hall sensor and a magnetoresistive (MR) sensor. The second sensor 1762 may detect the grip state of the electronic device 101. For example, the second sensor 1762 may detect the holding state or Free State of the electronic device 101 by the user. In an embodiment, the second sensor 1762 may be a grip sensor. The grip sensor may detect the grip state based on changes in the capacitance value according to the user's holding. The sensor 176, the first sensor 1761, and/or the second sensor 1762 may also be referred to as a sensor unit, a sensor module, or a sensor device.

The processor 120 may control the electronic device 101. The electronic device 101 may include at least one processor 120. The processor 120 may determine a change in the folding state of the electronic device 101, based on a signal detected by the first sensor (e.g., the Hall sensor) 1761. The processor 120 may reset the second sensor (e.g., the grip sensor) 1762.

For example, the electronic device 101 may change from an open state to a closed state. In this case, the metal members included in the first housing and/or the second housing may come closer to the second housing and/or the first housing. Due to the effect of the metal members that have come closer, the capacitance value of the second sensor 1762 may change. Since the second sensor 1762 detects the holding state based on the change in the capacitance value, the second sensor 1762 may malfunction. Alternatively, the electronic device 101 may change from a closed state to an open state. In this case, the metal members included in the first housing and/or the second housing may move farther away from the second housing and/or the first housing. Due to the effect of the metal members that have moved farther away, the capacitance value of the second sensor 1762 may change. Since the second sensor 1762 detects the holding state based on the change in the capacitance value, the second sensor 1762 may malfunction. Therefore, when the folding state of the electronic device 101 changes, the processor 120 may reset the second sensor 1762 to eliminate the effect caused by the metal members.

When the capacitance value of the second sensor 1762 is reset to an initial value and the state of the electronic device 101 does not change, the capacitance value of the second sensor 1762 may maintain the initial value. Since the capacitance value of the second sensor 1762 does not change, the grip state detected by the second sensor 1762 may be an unknown state.

The processor 120 may determine the grip state, which is the unknown state, based on the in-phase quadrature phase (IQ) value of the antenna. The processor 120 may identify the IQ value of the antenna. For example, an in-phase quadrature phase (IQ) graph is a graph that represents the in-phase component and quadrature phase component values, based on the magnitude and phase of a sine wave of radiated power (e.g., TX power). The IQ value of the antenna may vary depending on the grip state. For example, when the electronic device 101 is in a free state, the IQ value may fall within a predetermined range. Alternatively, when the electronic device 101 is in a holding state, the IQ value may exceed the predetermined range. Therefore, the processor 120 may identify the grip state of the electronic device 101 based on the identified IQ value and a preset threshold range. For example, when the identified IQ value is below the preset threshold range, the processor 120 may identify the grip state as a free state. Alternatively, when the identified IQ value exceeds the preset threshold range, the processor 120 may identify the grip state as a holding state. Therefore, the electronic device 101 may identify the unknown grip state as the grip state.

When the grip state is identified as a holding state, the processor 120 may change the configuration state of the antenna 197 to correspond to the holding state. For example, an operation for the configuration state of the antenna may include tune code setting and/or whether to perform SAR power back-off. A tune code may be a configuration code of the antenna 197 corresponding to the folding state and the grip state. As an example, when the folding state is an open state and the grip state is a holding state, the processor 120 may set the tune code to open/holding. When the folding state is an open state and the grip state is a free state, the processor 120 may set the tune code to open/free. When the folding state is a closed state and the grip state is a holding state, the processor 120 may set the tune code to closed/holding. Alternatively, when the folding state is a closed state and the grip state is a free state, the processor 120 may set the tune code to closed/free. The configuration state (or value) of the antenna 197 may be changed depending on the set tune code.

Alternatively, when the grip state is identified as a holding state, the processor 120 may determine whether to perform specific absorption rate (SAR) power back-off. SAR power back-off may mean minimizing the radiated power of the antenna 197 to reduce the effect of electromagnetic waves on a user. Therefore, when the grip state is identified as a holding state, the processor 120 may perform SAR power back-off to minimize the radiated power of the antenna 197.

As described above, the second sensor 1762 may detect the grip state based on changes in the capacitance value. The capacitance value of the second sensor 1762 may change depending on the occurrence of a grip event. For example, a user may hold the electronic device 101 in a free state. Depending on the user's holding, the capacitance value of the second sensor 1762 may change. The processor 120 may determine the grip state as a holding state, based on the change in the capacitance value. Alternatively, the user may release the electronic device 101 in a holding state (release of the holding state). The capacitance value of the second sensor 1762 may change depending on the user's release of the holding state. The processor 120 may determine the grip state as a free state, based on the change in the capacitance value. Therefore, when a grip event is detected through the second sensor 1762, the processor 120 may identify the grip state, based on information detected by the second sensor 1762.

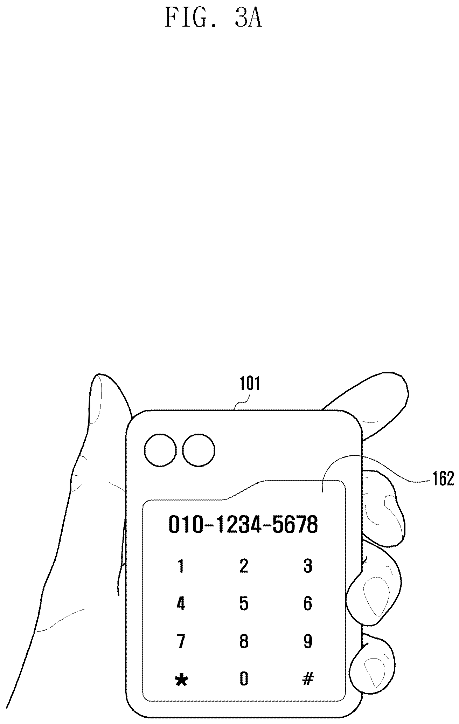

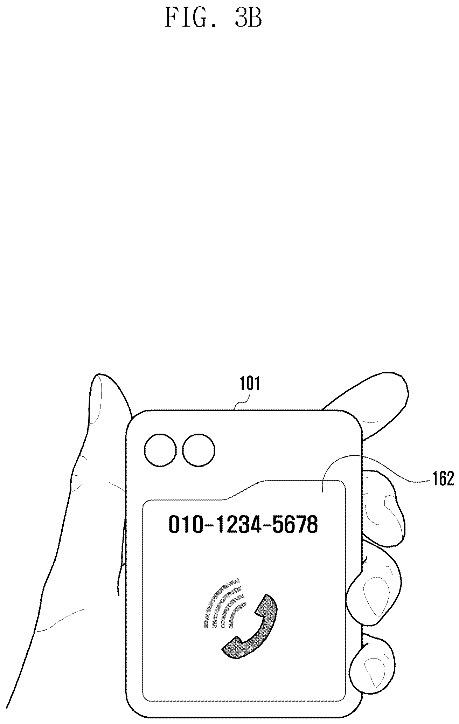

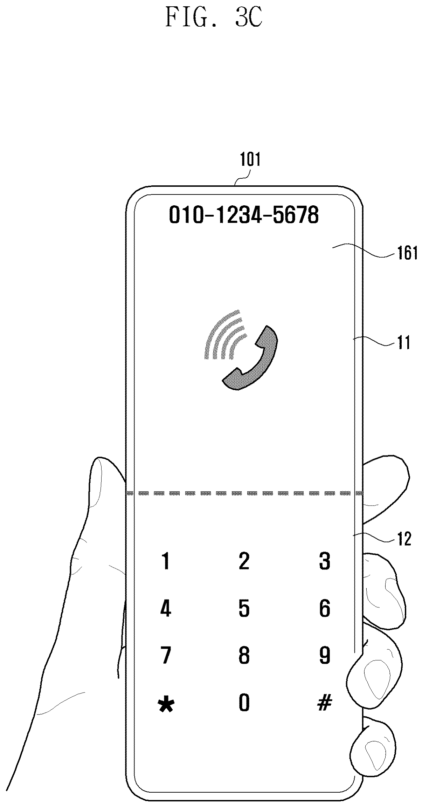

FIGS. 3A, 3B, and 3C illustrate an incoming call process according to various embodiments.

Referring to FIG. 3A, the electronic device 101 in which a user enters a dialed number is illustrated. Referring to FIG. 3B, the electronic device 101 attempting to make a call is illustrated. FIG. 3C illustrates the electronic device 101 opened when a call is connected to a counterpart. A description will be made with reference to FIGS. 3A to 3C together.

For example, the electronic device 101 may be of a foldable type. The electronic device 101 may be in a closed state and held by a user. The electronic device 101 may include a first area 11 and a second area 12 of a flexible display in the first housing and the second housing, respectively. The electronic device 101 may include a separate display on the opposite surface of the first housing or the second housing. The flexible display is a main display 161, and the separate display may be an auxiliary display 162. The auxiliary display 162 may display information when the electronic device 101 is in a closed state. As an embodiment, a user may attempt to make a call while holding the closed electronic device 101. The auxiliary display 162 may display information indicating a dialed phone number, a keypad, and an outgoing call attempt. The folding state of the electronic device 101 is a closed state, and the grip state may be a holding state. When the call is connected to a counterpart, the user may open the electronic device 101 and proceed with the call.

When the electronic device 101 is opened, the electronic device 101 may determine a change in the folding state of the electronic device 101 by using the first sensor (e.g., a Hall sensor, an MR sensor) 1761. Additionally, the electronic device 101 may reset the second sensor (e.g., a grip sensor) 1762 to eliminate any effect caused by the metal members of the first housing and/or the second housing.

After the capacitance value of the second sensor 1762 is reset to an initial value, no event (e.g., grip event) occurs, and thus the electronic device 101 may determine that the grip state is an unknown state. In this case, the electronic device 101 may determine the grip state, which is the unknown state, based on the IQ value of the antenna. The electronic device 101 may identify an IQ value of the antenna 197. Furthermore, the electronic device 101 may identify the grip state of the electronic device 101, based on the identified IQ value and a preset threshold range. For example, when the identified IQ value is equal to or less than the preset threshold range, the electronic device 101 may identify the grip state as a free state. Alternatively, when the identified IQ value exceeds the preset threshold range, the electronic device 101 may identify the grip state as a holding state.

The electronic device 101 may configure the state of the antenna 197, based on the identified grip state. For example, an operation of configuring the state of the antenna 197 may include tune code setting and/or whether to perform SAR power back-off. As an example, as illustrated in FIG. 3C, the electronic device 101 may determine that the folding state is an open state and the grip state is a holding state. The electronic device 101 may set the tune code to open/holding. The electronic device 101 may configure the state (or value) of the antenna 197 according to the set tune code. Additionally, the electronic device 101 may perform an SAR power back-off operation corresponding to the tune code set to open/holding.

Thereafter, when a grip event is detected, the electronic device 101 may identify the grip state, based on the information detected by the second sensor. For example, when the user releases the holding of the electronic device 101, the capacitance value of the second sensor 1762 may change. The electronic device 101 may determine the grip state as a free state, based on the change in the capacitance value.

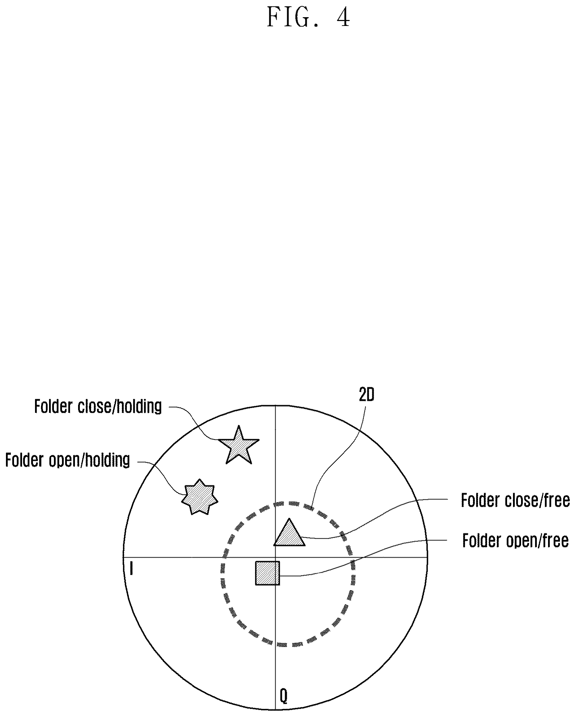

FIG. 4 illustrates an IQ graph according to various embodiments.

Referring to FIG. 4, an embodiment of an IQ value according to the state of the electronic device 101 is illustrated. As described above, the IQ graph is a graph that represents in-phase component and quadrature phase component values, based on the magnitude and phase of a sign wave of radiated power (e.g., TX power). The X-axis of the IQ graph may represent an I component, and the Y-axis may represent a Q component. The IQ value may vary depending on the folding state and grip state of the electronic device 101.

For example, when the electronic device 101 is in a closed state (the folding state) and a free state (the grip state) or in an open state (folding state) and/or a free state (grip state), the IQ value may be a value near the origin. Alternatively, when the electronic device 101 is in a closed state (the folding state) and a holding state (the grip state), or in an open state (the folding state) and a holding state (the grip state), the IQ value may be a value relatively far from the origin. As illustrated in FIG. 4, the IQ value may be more affected by the grip state than by the folding state. Therefore, the electronic device 101 may determine, based on a predetermined range 20, that the grip state is a holding state or a free state.

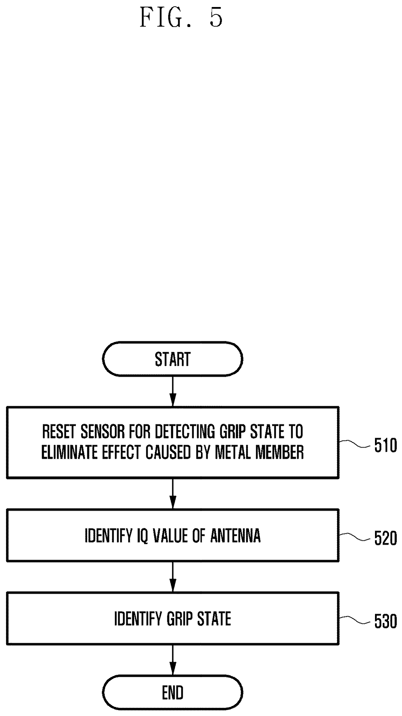

FIG. 5 is a flowchart illustrating a control method for an electronic device according to various embodiments.

Referring to FIG. 5, when the folding state of the electronic device 101 changes, the electronic device may reset a sensor, which detects a grip state, to eliminate an effect caused by a metal member (510). For example, the electronic device 101 may be of a foldable type including a first housing and a second housing. The first housing and/or the second housing may include a metal member. The sensor (e.g., a grip sensor) for detecting the grip state may determine the grip state, based on a change in the value of capacitance. The value of capacitance may vary depending on changes in the distance from the metal member. Therefore, to eliminate an effect of the metal member regardless of the grip state, the electronic device 101 may reset the sensor for detecting the grip state. When the sensor for detecting the grip state is reset, the electronic device 101 may determine that the grip state is an unknown state.

The electronic device 101 may identify an IQ value of an antenna to determine the grip state that has been changed to the unknown state (520). Then, the electronic device 101 may identify the grip state, based on the identified IQ value and a preset threshold range (530). The IQ value may be distributed at different positions on an IQ graph, depending on the grip state. Therefore, the electronic device 101 may determine the grip state, based on the IQ values. For example, when the identified IQ value is equal to or less than the preset threshold range, the electronic device 101 may identify the grip state as a free state. Alternatively, when the identified IQ value exceeds the preset threshold range, the electronic device 101 may identify the grip state as a holding state. When the grip state is identified as a holding state, the electronic device 101 may configure (e.g., change or maintain) the state of the antenna 197 to correspond to the holding state. For example, the antenna state configuration operation may include tune code setting and/or whether to perform SAR power back-off. Thereafter, when a grip event is detected using the sensor for detecting the grip state, the electronic device 101 may identify the grip state, based on information detected by the sensor. For example, the electronic device 101 may identify the grip state as either a holding state or a free state by using the grip sensor.

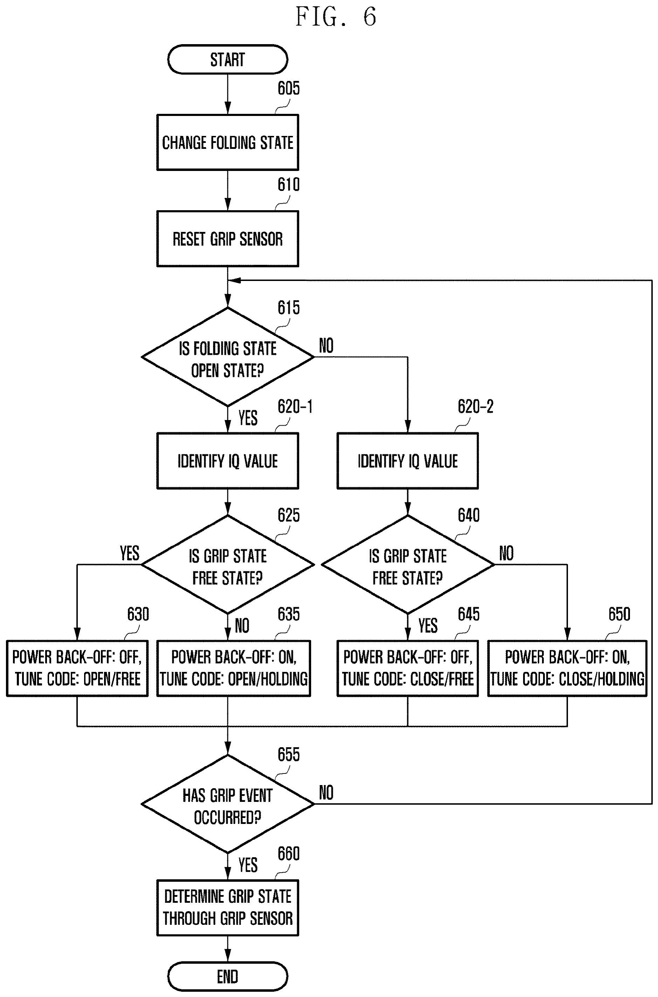

FIG. 6 is a flowchart illustrating a process for identifying an unknown grip state by using an IQ value according to various embodiments.

Referring to FIG. 6, the folding state of the electronic device 101 may be changed (605). When the folding state is changed, the grip sensor may be affected by the metal member included in the first housing and/or the second housing of the electronic device 101. Therefore, the electronic device 101 may reset a grip sensor (610).

The electronic device 101 may determine whether the folding state is in an open state, by using a magnetic sensor (615). However, since the grip sensor has been reset, the electronic device 101 may not be able to determine the grip state by using the grip sensor. In this case, the electronic device 101 may determine the grip state by checking an IQ value of the antenna 197 (620-1, 620-2). The electronic device 101 may determine the grip state, based on the IQ value and a preset range (625, 640). For example, when the IQ value is within the preset range, the electronic device 101 may determine that the grip state is a free state (625-YES, 640-YES). Alternatively, when the IQ value exceeds the preset range, the electronic device 101 may determine that the grip state is a holding state (625-NO, 640-NO).

The electronic device 101 may configure the state of the antenna, based on the folding state and the grip state. The antenna state configuration operation may include power back-off and/or tune code setting. For example, when the folding state is an open state (615-YES) and the grip state is a free state (625-YES), the electronic device 101 may set the tune code to open/free without performing power back-off control (off) (630). When the folding state is an open state (615-YES) and the grip state is a holding state (625-NO), the electronic device 101 may perform power backoff control (on) and set the tune code to open/holding (635). When the folding state is a closed state (615-NO) and the grip state is a free state (640-YES), the electronic device 101 may set the tune code to close/free without performing power back-off control (off)

(645). Alternatively, when the folding state is a closed state (615-NO) and the grip state is a holding state (640-NO), the electronic device 101 may perform power back-off control (on) and set the tune code to closed/holding (650). The electronic device 101 may control the output of the antenna, based on the presence or absence of power back-off control and/or the tune code setting value.

The electronic device 101 may determine whether a grip event has occurred (655). When no grip event has occurred (655-NO), the electronic device 101 may repeat the aforementioned process. When a grip event has occurred (655-YES), the electronic device 101 may determine the grip state by using the grip sensor (660).

According to various embodiments, an electronic device 101 may include a first housing and a second housing including metal members. The electronic device 101 may be of a foldable type. The electronic device 101 may include an antenna 197, a first sensor 1761 configured to detect the folding state of the electronic device 101, a second sensor 1762 configured to detect the grip state of the electronic device 101, and at least one processor 120. The at least one processor 120 may, when a change in the folding state is detected by the first sensor 1761, reset the second sensor 1762 to eliminate an effect caused by metal members. The at least one processor 120 may identify an IQ value of the antenna 197 to determine a grip state that has been changed to an unknown state in response to the reset of the second sensor 1762. The at least one processor 120 may identify the grip state, based on the identified IQ value and a preset threshold range.

For example, at least one processor 120 may identify the grip state as a free state when the identified IQ value is equal to or less than the preset threshold range. Alternatively, the at least one processor 120 may identify the grip state as a holding state when the identified IQ value exceeds the preset threshold range.

For example, the at least one processor 120 may, when the grip state is identified as a holding state, change the configuration state of the antenna 197 to correspond to the holding state.

For example, an operation for the configuration state of the antenna 197 may include at least one of tune code setting and whether to perform SAR power back-off.

For example, the at least one processor 120 may, when a grip event is detected by the second sensor 1762, identify the grip state, based on information detected by the second sensor 1762.

According to various embodiments, a control method for an electronic device 101 may, when the folding state changes, reset a sensor 1762, configured to detect a grip state, to eliminate an effect caused by metal members. The control method may identify an IQ value of an antenna 197 to determine a grip state that has been changed to an unknown state in response to the reset of the sensor 1762. The control method may identify the grip state, based on the identified IQ value and a preset threshold range.

For example, the control method may identify the grip state as a free state when the identified IQ value is equal to or less than the preset threshold range. Alternatively, the control method may identify the grip state as a holding state when the identified IQ value exceeds the preset threshold range.

For example, when the grip state is identified as a holding state, the control method may change a configuration state of the antenna 197 to correspond to the holding state.

For example, an operation for the configuration state of the antenna 197 may include at least one of tune code setting and whether to perform SAR power back-off.

For example, when a grip event is detected by the sensor 1762, the control method may identify the grip state, based on information detected by the sensor 1762

It should be appreciated that various examples of the disclosure and the terms used therein are not intended to limit the technological features set forth herein to particular examples and include various changes, equivalents, or replacements for a corresponding example. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it denotes that the element may be coupled with the other element directly (e.g., wiredly), wirelessly, or via a third element.

As used in connection with various examples of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an example, the module may be implemented in a form of an application-specific integrated circuit (ASIC).

Various examples as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an example, a method according to various examples of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various examples, each component (e.g., a module or a program) of the above-described components may include a single entity or multiple entities, and some of the multiple entities may be separately disposed in different components. According to various examples, one or more of the above-described components may be omitted, or one or more other components may be added. Alternatively or additionally, a plurality of components (e.g., modules or programs) may be integrated into a single component. In such a case, according to various examples, the integrated component may still perform one or more functions of each of the plurality of components in the same or similar manner as they are performed by a corresponding one of the plurality of components before the integration. According to various examples, operations performed by the module, the program, or another component may be carried out sequentially, in parallel, repeatedly, or heuristically, or one or more of the operations may be executed in a different order or omitted, or one or more other operations may be added.

The effects of this document are not limited to those mentioned above, and other effects not mentioned herein will be understood by those skilled in the art from the above description.

## Claims

1. A foldable electronic device comprising a first housing and a second housing comprising metal members, the foldable electronic device comprising:
an antenna;
a first sensor detecting a folding state of the foldable electronic device;
a second sensor detecting a grip state of the foldable electronic device; and
at least one processor,
wherein the at least one processor is configured to:
in a case that a change in the folding state is detected through the first sensor, reset the second sensor to eliminate an effect caused by the metal members;
identify an IQ value of the antenna to determine a grip state that has been changed to an unknown state in response to the reset of the second sensor; and
identify the grip state, based on the identified IQ value and a preset threshold range.

2. The electronic device of claim 1, wherein the at least one processor is configured to identify the grip state as a free state in case that the identified IQ value is equal to or less than the preset threshold range, and identify the grip state as a holding state in case that the identified IQ value exceeds the preset threshold range.

3. The electronic device of claim 2, wherein the at least one processor is configured to, in case that the grip state is identified as a holding state, change a configuration state of the antenna to correspond to the holding state.

4. The electronic device of claim 3, wherein an operation for the configuration state of the antenna comprises at least one of tune code setting and whether to perform SAR power back-off.

5. The electronic device of claim 1, wherein the at least one processor is configured to, in case that a grip event is detected through the second sensor, identify the grip state, based on information detected by the second sensor.

6. A method for controlling a foldable electronic device comprising a first housing and a second housing comprising metal members, the method comprising:
in case that a folding state of the foldable electronic device is changed, resetting a sensor, which is configured to detect a grip state, to eliminate an effect caused by the metal members;
identifying an IQ value of an antenna to determine a grip state that has been changed to an unknown state in response to the reset of the sensor; and
identifying the grip state, based on the identified IQ value and a preset threshold range.

7. The method of claim 6, wherein the identifying of the grip state comprises identifying the grip state as a free state in case that the identified IQ value is equal to or less than the preset threshold range, and identifying the grip state as a holding state in case that the identified IQ value exceeds the preset threshold range.

8. The method of claim 7, further comprising, in case that the grip state is identified as a holding state, changing a configuration state of the antenna to correspond to the holding state.

9. The method of claim 8, wherein an operation for the configuration state of the antenna comprises at least one of tune code setting and whether to perform SAR power back-off.

10. **11.** The method of claim 6, further comprising, in case that a grip event is detected through the sensor, identifying the grip state, based on information detected by the sensor.
